# EUROPEAN PATENT APPLICATION

(11) **EP 4 583 274 A1**
(43) Date of publication of application: **09.07.2025**
(21) Application number: 24223310.4
(22) Date of filing: 26.12.2024
(51) Int. Cl.: H01M 50/211, H01M 50/249, H01M 50/507, H01M 50/55, H01M 50/271

(54) **BATTERY MODULE, BATTERY PACK, AND ELECTRIC APPARATUS**

(30) Priority: 29.12.2023 CN 202311872357
(71) Applicant: Xiamen Ampack Technology Limited, Xiamen City, Fujian Province, 361000 (CN)
(72) Inventor: PENG, Fanggui, Xiamen City, Fujian Province, People s Republic of China, 361000 (CN); WU, Mingjie, Xiamen City, Fujian Province, People s Republic of China, 361000 (CN); NONG, Wenbin, Xiamen City, Fujian Province, People s Republic of China, 361000 (CN)
(74) Representative: Icosa

(57) **Abstract**

A battery module (10) includes a cell assembly (100), a first component (200), a second component (300), and an insulation member (400). The cell assembly (100) includes a plurality of cells (110), and each cell (110) includes a cell housing (111) and an electrode terminal (112), the electrode terminal (112) extending out of the cell housing (111). Along a first direction (X), the first component (200) is disposed on a side of the cell assembly (100), the electrode terminal (112) is connected to the first component (200). The second component (300) includes a base portion (310) and an extension portion (320), where the base portion (310) has an accommodating space (301), the first component (200) is located in the accommodating space (301), and the extension portion (320) protrudes from the base portion (310). At least a part of the insulation member (400) is located in the accommodating space (301), and the first component (200) and the second component (300) are bonded and fixed through the insulation member (400).

## Description

### TECHNICAL FIELD

This application relates to the field of battery technology, and specifically, to a battery module, a method for assembling a battery module, a battery pack, and an electric apparatus.

### BACKGROUND

When a battery module is used without being statically placed (such as the battery module of a drone), cells inside the housing may shake, leading to issues such as short circuit and damage to the wiring harness connected to the cells, affecting the use of the battery module.

### SUMMARY

Embodiments of this application provide a battery module, a method for assembling a battery module, a battery pack, and an electric apparatus, so as to improve the stability of the battery module.

According to a first aspect, an embodiment of this application provides a battery module including a cell assembly, a first component, a second component, and an insulation member. The cell assembly includes a plurality of cells, and each cell includes a cell housing and an electrode terminal, the electrode terminal extending out of the cell housing. Along a first direction, the first component is disposed on a side of the cell assembly, the electrode terminal being connected to the first component. The second component includes a base portion and an extension portion, where the base portion has an accommodating space, the first component being located in the accommodating space, and the extension portion protrudes from the base portion. At least a part of the insulation member is located in the accommodating space, and the first component and the second component are bonded and fixed through the insulation member.

In the above technical solution, the first component is fixed relative to the housing. When the battery module shakes, the possibility of the first component shaking relative to the housing is relatively low, thereby reducing the possibility of short circuit and damage to the first component, as well as the possibility of thermal runaway in the battery module. Additionally, since the cell assembly is connected to the first component, the position of the cell assembly relative to the housing is also more stable. When the battery module shakes, the possibility of problems such as collision and friction between the cell assembly and the housing is relatively low, thereby reducing the possibility of damage to the cell assembly.

In one or more/any one of the above optional embodiments, the base portion includes a bottom wall and a plurality of side walls, where along the first direction, the bottom wall is located on a side of the first component, the side of the first component being a side oriented away from the cell assembly, the side walls are disposed around the bottom wall, and the plurality of side walls and the bottom wall together form the accommodating space; and the extension portion protrudes from the side walls along a direction perpendicular to the first direction.

The above technical solution allows the side walls to protect and fix the first component, facilitates arrangement of the insulation member in the accommodating space formed by the side walls and the bottom wall, and also facilitates the fixed connection between the extension portion and the housing.

In one or more/any one of the above optional embodiments, the plurality of side walls are disposed around an outer side of the cell assembly, and a part of each cell housing is located in the accommodating space.

In the above technical solution, the side walls play a role in fixing and protecting the cell housing. When the battery module shakes, the probability of the cells shaking relative to the housing is smaller, further reducing the possibility of problems such as collision and friction between the cell assembly and the housing, and further reducing the possibility of damage to the cell assembly.

In one or more/any one of the above optional embodiments, the second component includes a recess, where the recess is provided on at least one of the side walls; when viewed along the first direction, the recess is farther from the cell assembly than other parts of the side wall; and a part of the insulation member is located in the recess.

In the above technical solution, the insulation material can be poured into the accommodating space through the recess, and some of the insulation material remains in the recess, reducing the possibility of water vapor entering the accommodating space through the recess, thereby reducing the possibility of corrosion of the first component and the cell assembly. Moreover, the recess is disposed on the side wall, not occupying the accommodating space, which is beneficial for increasing the energy density of the battery module.

In one or more/any one of the above optional embodiments, the recess includes a first opening and a second opening, where the first opening faces the cell assembly, and when viewed along the first direction, a part of the bottom wall is located in the second opening.

In one or more/any one of the above optional embodiments, the recess is configured for providing insulation material to the accommodating space through the second opening to form the insulation member.

In the above technical solution, the insulation member is formed by pouring an insulation material, so that the insulation member is bonded and fixed to the first component and the second component, increasing the connection strength between the first component and the second component. This further reduces the possibility of the first component shaking relative to the housing, thereby reducing the possibility of short circuit and damage to the first component, as well as the possibility of thermal runaway in the battery module.

In one or more/any one of the above optional embodiments, the bottom wall is provided with a protrusion on a side facing the cell assembly, the first component is in contact with the protrusion, a first gap is formed between the first component and the bottom wall, and a part of the insulation member is located in the first gap.

In the above technical solution, the first component and the second component can be bonded and fixed through the a part of the insulation member located in the first gap.

In one or more/any one of the above optional embodiments, the battery module further includes a connecting member, where the connecting member is connected to the first component, and the connecting member is configured to transmit power and/or electrical signals from the cell assembly; and the bottom wall is provided with a through hole, the connecting member runs through the through hole, and a sealing member is provided between the through hole and the connecting member.

In the above technical solution, the through hole is disposed, allowing the connecting member to run through the through hole to connect to other components. Moreover, the through hole and the connecting member are sealed by the sealing member, so that when the cell assembly, the first component, the second component, and the connecting member are assembled and inverted, and the insulation material is poured into the accommodating space through the recess, the possibility of the insulation material leaking from between the through hole and the connecting member is reduced, facilitating the formation of the insulation member. The sealing member also serves to fix the connecting member, reducing the possibility of short circuit and damage caused by the shaking of the connecting member.

In one or more/any one of the above optional embodiments, the cell further includes an electrode assembly, and the cell housing includes a main body portion for accommodating the electrode assembly and a sealing portion, where the electrode terminal extends out of the cell housing from the sealing portion; the electrode terminal includes a connecting portion extending out of the cell housing, the connecting portion being connected to the first component; and the insulation member covers at least a part of each connecting portion; and/or the sealing portion is located in the accommodating space, and the insulation member covers at least a part of each sealing portion.

The above technical solution makes the connecting portion and/or the sealing portion more stable relative to the housing, thereby reducing the possibility of short circuit and damage to the cell, as well as the possibility of thermal runaway in the battery module.

In one or more/any one of the above optional embodiments, at least a part of the main body portion is located in the accommodating space.

The above technical solution makes the main body portion more stable relative to the housing, and the entire cell more stable relative to the housing, reducing the possibility of the electrode terminal being pulled due to shaking of the main body portion relative to the housing, thereby further reducing the possibility of short circuit and damage to the cell, as well as the possibility of thermal runaway in the battery module.

In one or more/any one of the above optional embodiments, the plurality of cells are stacked in a second direction, and a second gap is formed between adjacent sealing portions along the second direction; the battery module further includes at least one buffer member, the buffer member being disposed in at least one of the second gaps; and in a third direction, a projection of the recess overlaps with a projection of one of the second gaps, and the projection of the recess and projection of the buffer member are spaced apart from each other; where the first direction, the second direction, and the third direction are perpendicular to each other.

In the above technical solution, when the sealing portion moves relative to the main body portion, the buffer member provides buffering for the sealing portion, reducing the possibility of cracking caused by large movement of the sealing portion, thereby reducing the possibility of leakage from the cell and corrosion of other components. Additionally, the buffer member can also space apart the two sealing portions on its two sides, reducing the possibility of short circuit between electrode terminals of two adjacent cells, thereby reducing the possibility of thermal runaway in the battery module. The above technical solution also facilitates entry of the insulation material into the accommodating space through the recess and the gap, and reduces the possibility of the buffer member blocking the flow of the insulation material, thereby facilitating the preparation of the insulation member.

In one or more/any one of the above optional embodiments, the battery module further includes a housing, where the housing has a third opening, the cell assembly is accommodated in the housing, the second component covers the third opening, and the extension portion is fixedly connected to the housing.

In the above technical solution, a closed accommodating space can be formed between the second component and the housing, to reduce the possibility of water vapor entering the accommodating space, thereby reducing the possibility of corrosion of the first component and the cell assembly.

In one or more/any one of the above optional embodiments, the extension portion is provided with a first connecting hole, and the battery pack further includes a first fixing member, the first fixing member extends throughthe first connecting hole and fixedly connected to the housing.

The above technical solution allows the second component to be stably connected to the housing, further reducing the possibility of the second component shaking relative to the housing.

In one or more/any one of the above optional embodiments, the extension portion is provided with a first annular groove on a side facing the housing, the housing is provided with an annular flange, and the annular flange is disposed around the opening, the annular flange being disposed in the first annular groove.

In the above technical solution, the first annular groove can limit the annular flange, making the relative positions of the second component and the housing more stable. This solution also increases the bonding area between the second component and the housing, further improving the sealing performance of the battery module and reducing the entry of external water vapor into the housing.

In one or more/any one of the above optional embodiments, the first component includes a circuit board.

According to a second aspect, an embodiment of this application provides a method for assembling the foregoing battery module, including: disposing the first component on a side of the cell assembly such that the first component is connected to electrode terminals of the plurality of cells of the cell assembly; installing the second component on a side of the first component, the side of the first component being a side oriented away from the cell assembly, the first component being located in the accommodating space; and inverting the cell assembly, the first component, and the second component as a whole, pouring an insulation material into the accommodating space, and cure the insulation material to form a insulation member, the first component and the second component being bonded and fixed through the insulation member.

According to a third aspect, an embodiment of this application provides a battery pack including an upper cover and the foregoing battery module, where along the first direction, the upper cover is disposed on a side of the second component, the side of the second component being a side oriented away from the cell assembly, and the upper cover is fixedly connected to the extension portion.

In the above technical solution, the first component is fixed relative to the upper cover. When the battery module shakes, the possibility of the first component shaking relative to the upper cover is relatively low, thereby reducing the possibility of short circuit and damage to the first component, as well as the possibility of thermal runaway in the battery module.

In one or more/any one of the above optional embodiments, the extension portion is provided with a second connecting hole, and the battery pack further includes a second fixing member, the second fixing member extends throughthe second connecting hole and fixedly connected to the upper cover and the housing.

The above technical solution allows the upper cover, the second component, and the housing to be stably connected, further reducing the possibility of the second component shaking relative to the upper cover and the housing.

In one or more/any one of the above optional embodiments, the extension portion is provided with a second annular groove on the side facing the upper cover, and a part of the upper cover is disposed in the second annular groove.

In the above technical solution, the second annular groove can limit the upper cover, making the relative positions of the second component and the upper cover more stable. The solution also increases the bonding area between the second component and the upper cover, further improving the sealing performance of the battery module and reducing the entry of external water vapor into the upper cover.

According to a fourth aspect, this application provides an electric device including a load and the foregoing battery pack, where the battery pack provides power to the load.

### BRIEF DESCRIPTION OF DRAWINGS

To describe the technical solutions of some embodiments of this application more clearly, the following briefly describes the accompanying drawings required for describing the embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic perspective view of a battery module according to some embodiments of this application;
FIG. 2 is a schematic exploded view of a battery pack according to some embodiments of this application;
FIG. 3 is a schematic perspective view of a cell of a battery module according to some embodiments of this application;
FIG. 4 is a schematic perspective view of a battery pack according to some embodiments of this application;
FIG. 5 is a schematic cross-sectional view of a battery pack according to some embodiments of this application;
FIG. 6 is a schematic perspective view of a battery module according to some embodiments of this application;
FIG. 7 is a schematic perspective view from one angle of a second component of a battery module according to some embodiments of this application;
FIG. 8 is a schematic perspective view from another angle of a second component of a battery module according to some embodiments of this application;
FIG. 9 is a schematic structural view from one angle of a second component of a battery module according to some embodiments of this application;
FIG. 10 is a schematic perspective view of a second component and an insulation member of a battery module according to some embodiments of this application;
FIG. 11 is a schematic perspective view of a partial structure of a battery module according to some embodiments of this application;
FIG. 12 is a schematic perspective view of a partial structure of a battery module according to some embodiments of this application;
FIG. 13 is a schematic view from one angle of a partial structure of a battery module according to some embodiments of this application;
FIG. 14 is a schematic perspective view of a partial structure of a battery module according to some embodiments of this application;
FIG. 15 is a partially enlarged view of part A of the battery pack in FIG. 5; and
FIG. 16 is a schematic flowchart of a method for assembling a battery module according to some embodiments of this application.

Reference signs: 10. battery module; 100. cell assembly; 101. second gap; 110. cell; 111. cell housing; 1111. main body portion; 1112. sealing portion; 112. electrode terminal; 1121. connecting portion; 200. first component; 210. opening; 220. conductive member; 230. connecting member; 2301. first connecting member; 2302. second connecting member; 2303. third connecting member; 240. sealing member; 2401. first sealing member; 2402. second sealing member; 2403. third sealing member; 300. second component; 301. accommodating space; 302. first gap; 310. base portion; 311. bottom wall; 3111. protrusion; 3112. through hole; 312. side wall; 3121. first side wall; 3122. second side wall; 3123. third side wall; 3124. fourth side wall; 3125. recess; 3125a. first opening; 3125b. second opening; 320. extension portion; 321. first connecting hole; 322. first annular groove; 323. second connecting hole; 324. second annular groove; 330. first fixing member; 340. second fixing member; 400. insulation member; 500. buffer member; 600. housing; 600a. third opening; 610. annular flange; 700. upper cover; X. first direction; Y second direction; and Z. third direction.

### DETAILED DESCRIPTION OF EMBODIMENTS

To make the objectives, technical solutions, and advantages of the embodiments of this application clearer, the following clearly describes the technical solutions in some embodiments of this application with reference to the accompanying drawings in some embodiments of this application. Apparently, some described embodiments are some but not all of the embodiments of this application. All other embodiments obtained by persons of ordinary skill in the art based on some embodiments of this application fall within the protection scope of this application.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular sequence or relative importance.

Currently, from the perspective of market development, application of secondary batteries is becoming more extensive. Secondary batteries have been widely used in many fields, such as electric transportation tools including electric bicycles, electric motorcycles, and electric vehicles, electric tools, drones, and energy storage devices. With the continuous expansion of application fields of secondary batteries, market demands for secondary batteries are also increasing.

When the battery module is used without being static positioning, the battery module may shake. Due to the gap between the cells accommodated inside the housing of the battery module and the housing, the cells may shake within the housing and then collide and rub with the housing, causing damage to the cells. Additionally, since the wiring harness connected to the cells is fixed relative to the housing, the shaking of the cells relative to the housing may cause fatigue in the wiring harness, which results in short circuit and damage to the wiring harness, rendering the battery module unusable and potentially posing a risk of thermal runaway.

In view of this, to improve the existing battery module and reduce the possibility of damage to the battery module, this application provides a battery module including a cell assembly, a first component, a second component, and an insulation member. The cell assembly includes a plurality of cells, and each cell includes a cell housing and an electrode terminal, the electrode terminal extending out of the cell housing. Along a first direction, the first component is disposed on a side of the cell assembly, and the electrode terminal is connected to the first component to implement electrical connection between the first component and the cell. The second component includes a base portion and an extension portion, where the base portion has an accommodating space, the first component being located in the accommodating space, and the extension portion protrudes from the base portion. At least a part of the insulation member is located in the accommodating space, and the first component and the second component are bonded and fixed through the insulation member, allowing the first component to be fixed relative to the housing. When the battery module shakes, the possibility of the first component shaking relative to the housing is relatively low, thereby reducing the possibility of short circuit and damage to the first component, as well as the possibility of thermal runaway in the battery module. Additionally, since the cell assembly is connected to the first component, the position of the cell assembly relative to the housing is also more stable. When the battery module shakes, the possibility of problems such as collision or friction between the cell assembly and the housing is relatively low, thereby reducing the possibility of damage to the cell assembly.

Embodiments of this application provide an electric device using the battery module as a power source. The electric device may be but is not limited to drones, electric vehicles, electric tools, and energy storage devices. The drones may include agricultural drones, industrial drones, consumer drones, and the like. The electric vehicles may include electric cars, electric motorcycles, electric bicycles, electric boats, and the like.

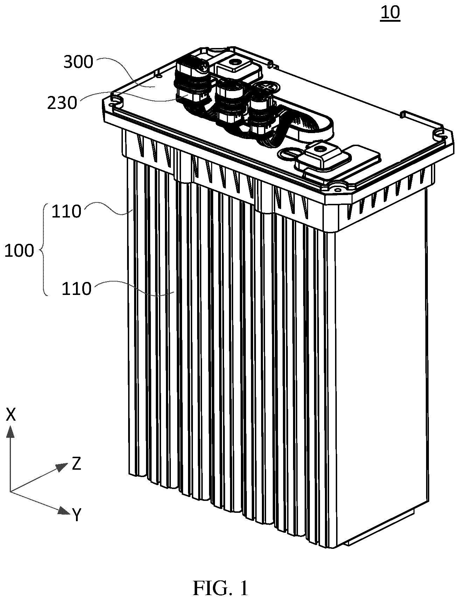

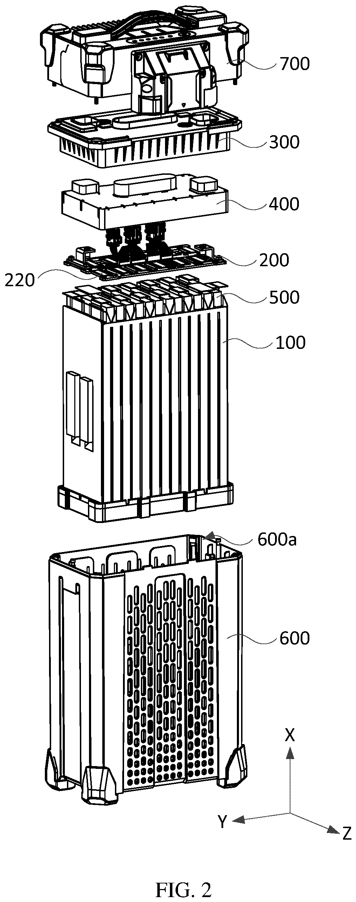

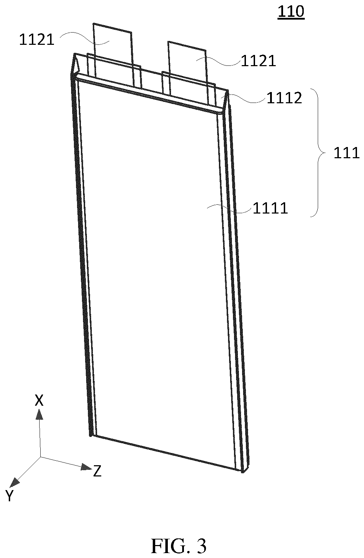

Referring to FIGs. 1 to 3, FIG. 1 is a schematic perspective view of a battery module according to some embodiments of this application, FIG. 2 is a schematic exploded view of a battery pack according to some embodiments of this application, and FIG. 3 is a schematic perspective view of a cell of a battery module according to some embodiments of this application.

Embodiments of this application provide a battery module 10 including a cell assembly 100. The cell assembly 100 includes a plurality of cells 110, and each cell 110 includes a cell housing 111 and an electrode terminal 112, the electrode terminal 112 extending out of the cell housing 111.

In the cell assembly 100, the plurality of cells 110 may be connected in series, parallel, or series-parallel, where being connected in series-parallel means a combination of series and parallel connections of the plurality of cells 110. The plurality of cells 110 may be directly connected in series, parallel, or series-parallel to form a cell pack. Certainly, the plurality of cells 110 may alternatively be first connected in series, parallel, or series-parallel to form a cell pack.

Each cell 110 may be a secondary battery. The secondary battery includes a lithium-ion battery, a sodium-ion battery, a magnesium-ion battery, and a solid-state battery, but is not limited thereto. The housing of the cell 110 may be in the form of a hard shell or a soft package.

In some embodiments, the battery module 10 includes a first component 200. Along a first direction X, the first component 200 is disposed on a side of the cell assembly 100, and the electrode terminal 112 is connected to the first component 200 to implement electrical connection between the first component 200 and the cell 110.

In some embodiments, the first component 200 includes a circuit board. Optionally, the circuit board includes a printed circuit board (Printed Circuit Board, PCB). Optionally, the circuit board includes a flexible printed circuit (Flexible Printed Circuit, FPC).

In some embodiments, the first component 200 may include a substrate and an electrical connector disposed on the substrate, where the substrate may be a plastic plate, a metal plate coated with an insulating layer, or the like.

In some embodiments, the battery module 10 includes a second component 300. The second component 300 includes a base portion 310 and an extension portion 320. The base portion 310 has an accommodating space 301, the first component 200 being located in the accommodating space 301, and the extension portion 320 protrudes from the base portion 310.

In some embodiments, the extension portion 320 is configured to be fixedly connected to a housing 600 for accommodating the cell assembly 100.

In some embodiments, the second component 300 may be an insulation sleeve made of an insulation material such as rubber, or silica gel, and the second component 300 may be configured to facilitate the formation of an insulation member 400.

In some embodiments, the second component 300 is integrally formed by an injection molding process.

In some embodiments, the second component 300 may be made of a flexible material, providing buffering for the cell assembly 100 and the first component 200, further reducing the possibility of damage to the cell assembly 100 and the first component 200 caused by collisions.

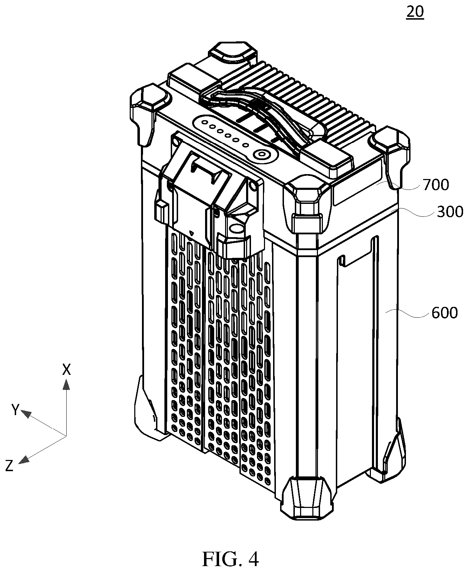

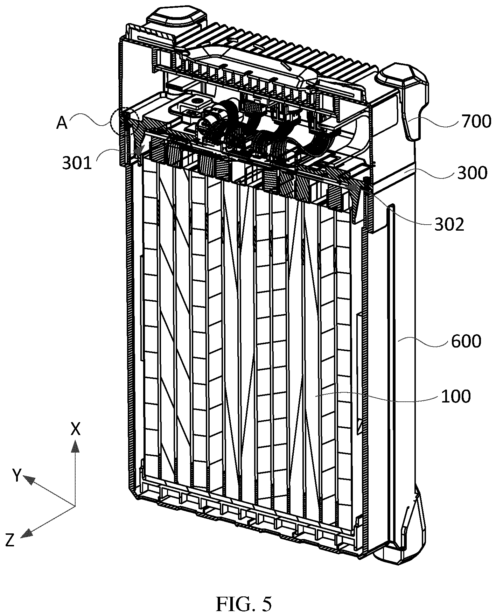

Referring to FIGs. 2, 4, and 5, FIG. 4 is a schematic perspective view of a battery pack according to some embodiments of this application, and FIG. 5 is a schematic cross-sectional view of a battery pack according to some embodiments of this application. The insulation member 400 is not shown in FIG. 5.

In some embodiments, the battery module 10 further includes a housing 600. The housing 600 has a third opening 600a, the cell assembly 100 is accommodated in the housing 600, the second component 300 covers the third opening 600a, and the extension portion 320 is fixedly connected to the housing 600. A closed accommodating space 301 can be formed between the second component 300 and the housing 600, to reduce the possibility of water vapor entering the accommodating space 301, thereby reducing the possibility of corrosion of the first component 200 and the cell assembly 100.

In some embodiments, the extension portion 320 and the housing 600 may be connected by fasteners such as screws or adhesives, or by interference fit, snap fit, or the like.

In some embodiments, the second component 300 may be made of a flexible material, which provides good sealing for the housing 600 and reduces the entry of external water vapor into the housing 600, further improving the sealing performance of the battery module 10.

In some embodiments, the housing 600 may be made of a metal material, which has high deformation resistance, thereby providing good protection and waterproof effects for the cell assembly 100.

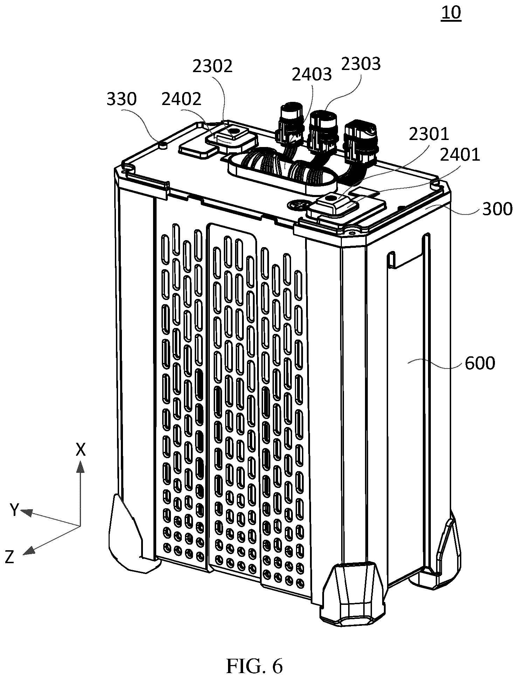

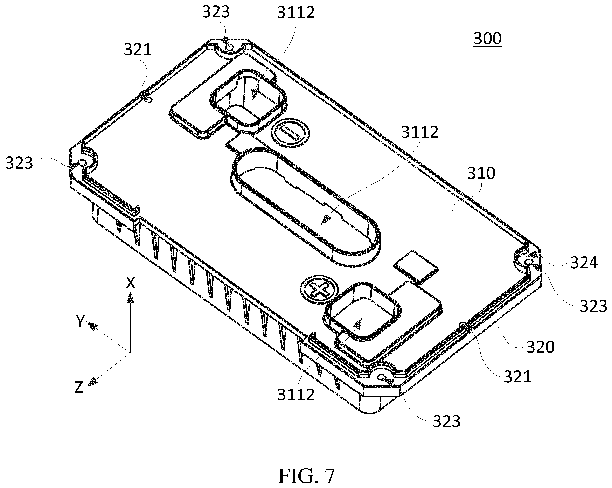

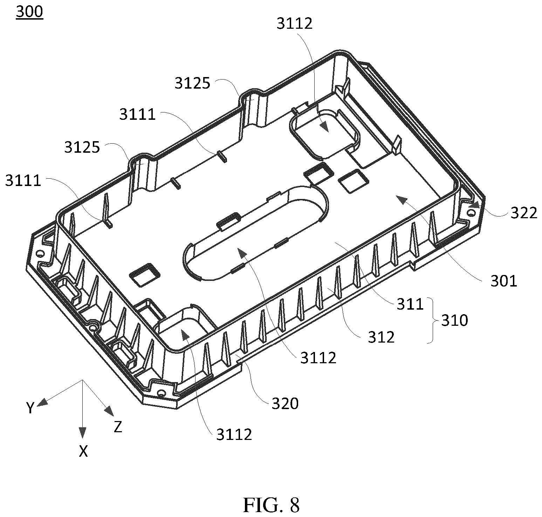

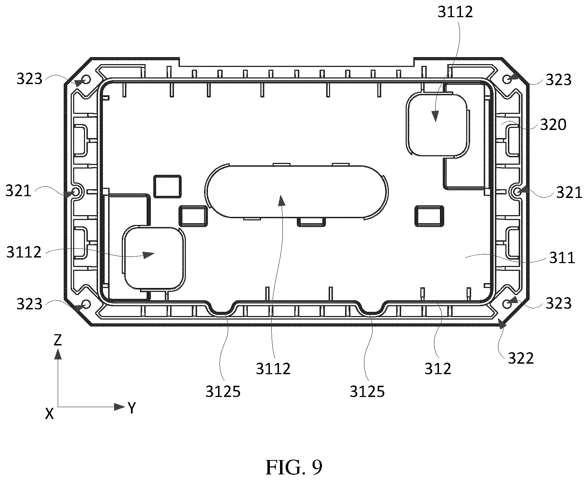

Referring to FIGs. 6 to 9, FIG. 6 is a schematic perspective view of a battery module according to some embodiments of this application; FIG. 7 is a schematic perspective view from one angle of a second component of a battery module according to some embodiments of this application; FIG. 8 is a schematic perspective view from another angle of a second component of a battery module according to some embodiments of this application; and FIG. 9 is a schematic structural view from one angle of a second component of a battery module according to some embodiments of this application.

In some embodiments, the extension portion 320 is provided with a first connecting hole 321, and the battery module 10 includes a first fixing member 330, the first fixing member 330 extends throughthe first connecting hole 321 and fixedly connected to the housing 600. This allows the second component 300 to be stably connected to the housing 600, further reducing the possibility of the second component 300 shaking relative to the housing 600.

In some embodiments, the first fixing member 330 may be a screw, and the first connecting hole 321 may be a threaded hole. The housing 600 may also be provided with a threaded hole for threaded connection to the screw.

In some other embodiments, the first fixing member 330 may alternatively be a pin, adhesive, or the like.

Referring to FIG. 2, in some embodiments, the battery module 10 includes an insulation member 400, at least a part of the insulation member 400 is located in the accommodating space 301, and the first component 200 and the second component 300 are bonded and fixed through the insulation member 400, so that the first component 200 is fixed relative to the housing 600. When the battery module 10 shakes, the possibility of the first component 200 shaking relative to the housing 600 is relatively low, thereby reducing the possibility of short circuit and damage to the first component 200, as well as the possibility of thermal runaway in the battery module 10. Additionally, since the cell assembly 100 is connected to the first component 200, the position of the cell assembly 100 relative to the housing 600 is also more stable. When the battery module 10 shakes, the possibility of problems such as collision and friction between the cell assembly 100 and the housing 600 is relatively low, thereby reducing the possibility of damage to the cell assembly 100.

In some embodiments, the insulation member 400 includes but is not limited to potting adhesive, foaming adhesive, or the like.

Referring to FIGs. 7 to 9, in some embodiments, the base portion 310 includes a bottom wall 311 and a plurality of side walls 312. Along the first direction X, the bottom wall 311 is located on a side of the first component 200, the side of the first component 200 being a side oriented away from the cell assembly 100. The side walls 312 are disposed around the bottom wall 311, and the plurality of side walls 312 and the bottom wall 311 together form the accommodating space 301. This allows the side walls 312 to protect and fix the first component 200, facilitating arrangement of the insulation member 400 in the accommodating space 301 formed by the side walls 312 and the bottom wall 311.

In some embodiments, along a direction perpendicular to the first direction X, the extension portion 320 protrudes from the side walls 312. This facilitates the fixed connection between the extension portion 320 and the housing 600.

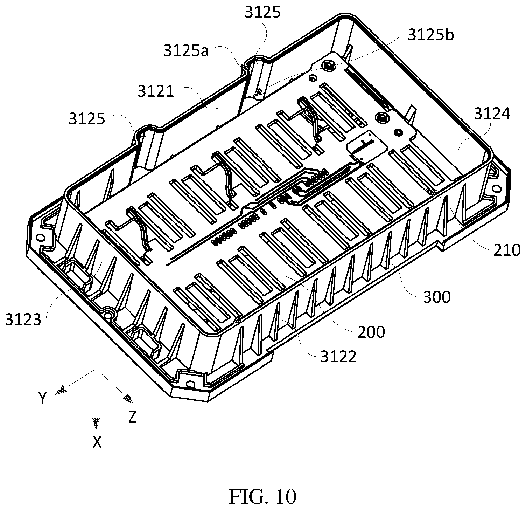

Referring to FIGs. 8 and 10, FIG. 10 is a schematic perspective view of a second component and an insulation member of a battery module according to some embodiments of this application.

In some embodiments, the plurality of side walls 312 include a first side wall 3121 and a second side wall 3122 opposite to each other along a third direction Z, and a third side wall 3123 and a fourth side wall 3124 opposite to each other along a second direction Y.

In some embodiments, referring to FIG. 9, when viewed along the first direction X, the extension portion 320 is disposed around an outer side of the plurality of side walls 312.

In some embodiments, the plurality of side walls 312 are disposed around an outer side of the cell assembly 100, and a part of each cell housing 111 is located in the accommodating space 301. The side walls 312 play a role in fixing and protecting the cell housing 111. When the battery module 10 shakes, the probability of the cells 110 shaking relative to the housing 600 is smaller, further reducing the possibility of problems such as collision and friction between the cell assembly 100 and the housing 600, and further reducing the possibility of damage to the cell assembly 100.

Referring to FIGs. 8, 9, and 11, FIG. 11 is a schematic perspective view of a partial structure of a battery module according to some embodiments of this application.

In some embodiments, the second component 300 includes a recess 3125, and the recess 3125 is provided on at least one side wall 312. As shown in FIG. 9, when viewed along the first direction X, the recess 3125 is farther from the cell assembly 100 than other parts of the side wall 312, and a part of the insulation member 400 is located in the recess 3125. In this way, the insulation material can be poured into the accommodating space 301 through the recess 3125, and some insulation material remains in the recess 3125, reducing the possibility of water vapor entering the accommodating space 301 through the recess 3125, thereby reducing the possibility of corrosion of the first component 200 and the cell assembly 100. Moreover, the recess 3125 is disposed on the side wall 312, not occupying the accommodating space 301, which is beneficial for increasing the energy density of the battery module 10.

In some embodiments, referring to FIG. 10, the recess 3125 is disposed in the first side wall 3121. When viewed along the first direction X, the recess 3125 is farther from the cell assembly 100 than other parts of the first side wall 3121. In other embodiments, the recess 3125 may alternatively be disposed in other side walls 312.

In some embodiments, the second component 300 includes a plurality of recesses 3125, and the recesses 3125 are disposed in at least a same side wall 312. For example, a plurality of recesses 3125 are disposed in the first side wall 3121.

In some embodiments, the second component 300 includes a plurality of recesses 3125, and the recesses 3125 are disposed in at least two side walls 312. For example, the recesses 3125 are disposed in the first side wall 3121 and the second side wall 3122.

In some embodiments, the recess 3125 is arranged in an arc shape, facilitating the preparation of the recess 3125 and the inflow of the insulation material. This can also reduce the possibility of damage to other components or being damaged when the recess 3125 interferes with other components.

In some other embodiments, the recess 3125 may alternatively be arranged in a zigzag shape.

Referring to FIGs. 8 and 10, in some embodiments, the recess 3125 includes a first opening 3125a and a second opening 3125b, where the first opening 3125a faces the cell assembly 100. Referring to FIG. 9, when viewed along the first direction X, a part of the bottom wall 311 is located in the second opening 3125b.

In some embodiments, the recess 3125 is configured for providing insulation material to the accommodating space 301 through the second opening 3125b to form the insulation member 400. The insulation member 400 is formed by pouring an insulation material, so that the insulation member 400 is bonded and fixed to the first component 200 and the second component 300, increasing the connection strength between the first component 200 and the second component 300. This further reduces the possibility of the first component 200 shaking relative to the housing 600, thereby reducing the possibility of short circuit and damage to the first component 200, as well as the possibility of thermal runaway in the battery module 10.

In some embodiments, the bottom wall 311 is provided with a protrusion 3111 on a side facing the cell assembly 100. The first component 200 is disposed on the protrusion 3111, a first gap 302 is formed between the first component 200 and the bottom wall 311, and a part of the insulation member 400 is located in the first gap 302. This allows the first component 200 and the second component 300 to be bonded and fixed through the part of the insulation member 400 located in the first gap 302.

In some embodiments, the bottom wall 311 is provided with a plurality of protrusions 3111. The plurality of protrusions 3111 are spaced apart along the bottom wall 311, making the first component 200 spaced from the bottom wall 311. This increases the connection strength between the first component 200 and the second component 300, and further reduces the possibility of the first component 200 shaking relative to the housing 600, thereby further reducing the possibility of short circuit and damage in the first component 200, as well as the possibility of thermal runaway in the battery module 10.

In some embodiments, the first component 200 and the second component 300 may be bonded by glue.

In some embodiments, the protrusion 3111 is connected to the side wall 312, facilitating the preparation of the protrusion 3111, and reducing the possibility of interference between the protrusion 3111 and components on the first component 200.

In some embodiments, the cell 110 further includes an electrode assembly (not shown in the figure), the cell housing 111 includes a main body portion 1111 for accommodating the electrode assembly and a sealing portion 1112, the electrode terminal 112 extending out of the cell housing 111 from the sealing portion 1112. The electrode terminal 112 includes a connecting portion 1121 extending out of the cell housing 111, and the connecting portion 1121 is connected to the first component 200 to implement electrical connection between the cell 110 and the first component 200.

In some embodiments, the cell housing 111 may be further configured to accommodate an electrolyte, such as an electrolyte solution. The cell housing 111 may be of various structural forms, such as cylindrical or rectangular. The cell housing 111 may be made of aluminum-plastic film.

In some embodiments, the cell 110 includes a pouch cell.

The electrode assembly includes a positive electrode plate, a negative electrode plate, and a separator. The cell 110 works mainly relying on the movement of metal ions between the positive electrode plate the negative electrode plate. The positive electrode plate includes a positive electrode current collector and a positive electrode active material layer, where the positive electrode active material layer is applied on surface of the positive electrode current collector, and the current collector not coated with the positive electrode active material layer serves as the positive electrode tab. Taking the lithium-ion battery as an example, the positive electrode current collector may be made of aluminum, and the positive electrode active material may be lithium cobalt oxide, lithium iron phosphate, ternary lithium, lithium manganate, or the like. The negative electrode plate includes a negative electrode current collector and a negative electrode active material layer, where the negative electrode active material layer is coated on the surface of the negative electrode current collector, and the part of the current collector not coated with the active material layer serves as the negative electrode tab. The negative electrode current collector may be made of copper, and the negative electrode active material may be carbon, silicon, or the like. The separator may be made of PP (polypropylene, polypropylene), PE (polyethylene, polyethylene), or the like.

The electrode assembly may be a winding structure formed by winding the positive electrode plate, the separator, and the negative electrode plate, or may be a stacked structure formed by stacking the positive electrode plate, the separator, and the negative electrode plate. In some embodiments, the insulation member 400 covers at least a part of each connecting portion 1121. This makes the connecting portion 1121 more stable relative to the housing 600, thereby reducing the possibility of short circuit and damage to the cell 110, as well as the possibility of thermal runaway in the battery module 10.

In some embodiments, the insulation member 400 covers the entirety of each connecting portion 1121, further enhancing the protection for the connecting portion 1121.

In some embodiments, the first component 200 is provided with an opening 210, and the first component 200 is provided with a conductive member 220. The conductive member 220 is located on a side of the first component 200, the side of the first component 200 being a side oriented away from the cell assembly 100. The connecting portion 1121 runs through the opening 210 and is connected to the conductive member 220.

In some embodiments, the sealing portion 1112 is located in the accommodating space 301, and the insulation member 400 covers at least a part of each sealing portion 1112. The insulation member 400 makes the sealing portion 1112 more stable relative to the housing 600, enhancing the protection for the sealing portion 1112, and reducing the possibility of leakage from the cell 110 and corrosion of other components.

In some embodiments, at least a part of the main body portion 1111 is located in the accommodating space. This makes the main body portion 1111 more stable relative to the housing 600, and the entire cell 110 more stable relative to the housing 600, reducing the possibility of the electrode terminal 112 being pulled due to shaking of the main body portion 1111 relative to the housing 600, thereby further reducing the possibility of short circuit and damage to the cell 110, as well as the possibility of thermal runaway in the battery module 10.

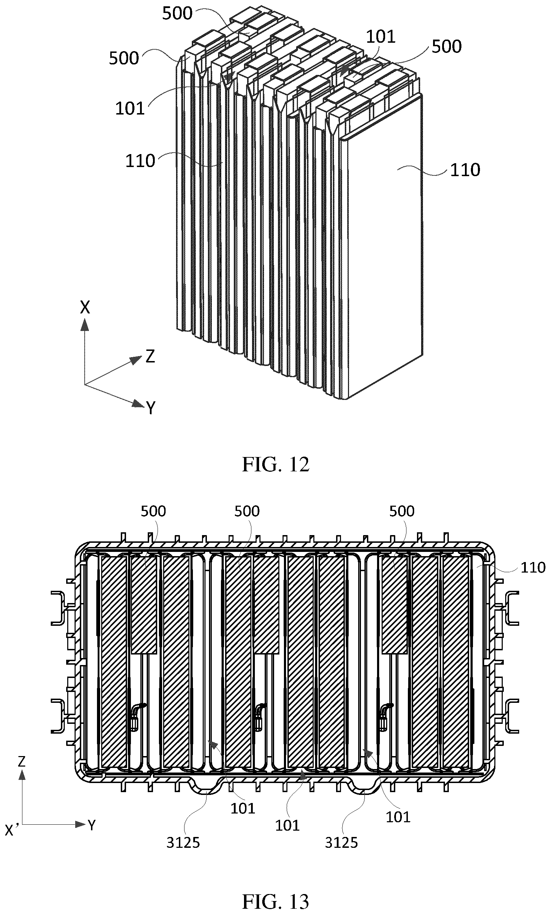

Referring to FIGs. 12 and 13, FIG. 12 is a schematic perspective view of a partial structure of a battery module according to some embodiments of this application, and FIG. 13 is a schematic view from one angle of a partial structure of a battery module according to some embodiments of this application.

In some embodiments, the plurality of cells 110 are stacked along a second direction Y, and a second gap 101 is formed between adjacent sealing portions 1112 along the second direction Y. The battery module 10 further includes at least one buffer member 500, the buffer member 500 is disposed in at least one of the second gaps 101.

When the sealing portion 1112 moves relative to the main body portion 1111, the buffer member 500 provides buffering for the sealing portion 1112, reducing the possibility of cracking caused by large movement of the sealing portion 1112, thereby reducing the possibility of leakage from the cell 110 and corrosion of other components. Additionally, the buffer member 500 can also space apart the two sealing portions 1112 on its two sides, reducing the possibility of short circuit between electrode terminals 112 of two adjacent cells 110, thereby reducing the possibility of thermal runaway in the battery module 10.

In some embodiments, along a third direction Z, a projection of the recess 3125 overlaps with a projection of one of the second gaps 101, and the projection of the recess 3125 does not overlap with a projection of the buffer member 500. This facilitates the entry of the insulation material into the accommodating space 301 through the recess 3125 and the gap, and reduces the possibility of the buffer member 500 blocking the flow of the insulation material, thereby facilitating the preparation of the insulation member 400.

In some embodiments, the first direction X, the second direction Y, and the third direction Z are perpendicular to each other.

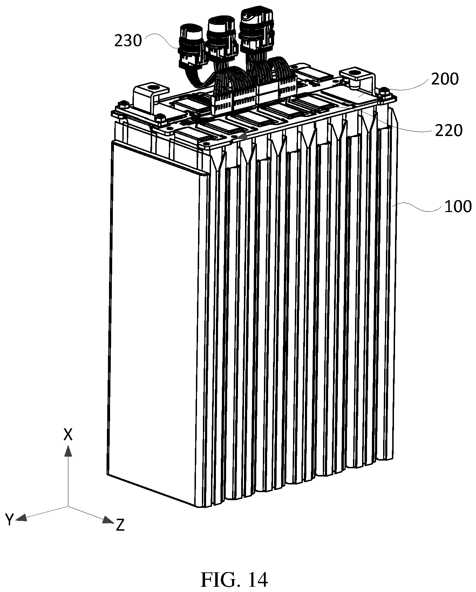

Referring to FIGs. 6 to 8 and FIG. 14, FIG. 14 is a schematic perspective view of a partial structure of a battery module according to some embodiments of this application.

In some embodiments, the battery module 10 further includes a connecting member 230, where the connecting member 230 is connected to the first component 200, and the connecting member 230 is configured to transmit power and/or electrical signals from the cell assembly 100.

In some embodiments, the bottom wall 311 is provided with a through hole 3112, the connecting member 230 runs through the through hole 3112, and a sealing member 240 is provided between the through hole 3112 and the connecting member 230.

With the through hole 3112 disposed, the connecting member 230 can run through the through hole 3112 to connect to other components. Moreover, the through hole 3112 and the connecting member 230 are sealed by the sealing member 240, so that when the cell assembly 100, the first component 200, the second component 300, and the connecting member 230 are assembled and inverted, and the insulation material is poured into the accommodating space 301 through the recess 3125, the possibility of the insulation material leaking from between the through hole 3112 and the connecting member 230 is reduced, facilitating the formation of the insulation member 400. The sealing member 240 also serves to fix the connecting member 230, reducing the possibility of short circuit and damage caused by the shaking of the connecting member 230.

In some embodiments, the connecting member 230 is configured to collect electrical signal information from the cell 110, where the electrical signal information includes but is not limited to voltage and current.

In some embodiments, the connecting member 230 may transmit power of the battery module 10. During discharging of the battery module 10, the electrical energy of the battery module 10 can be transmitted to a load of the electric device through the connecting member 230 to power the load of the electric device. During charging of the battery module 10, external electrical energy can be transmitted to the battery module 10 through the connecting member 230 to charge the battery module 10.

In some embodiments, the connecting member 230 may transmit electrical signals of the battery module 10, such as voltage signals, current signals, or temperature signals. The electrical signal of the battery module 10 can be transmitted to the circuit board through the connecting member 230, and a control unit (for example, a microcontroller) on the circuit board can control the charging and/or discharging of the battery module 10 based on the electrical signal of the battery module 10.

In some embodiments, the connecting member 230 may transmit power and electrical signals of the battery module 10. In some embodiments, the connecting member 230 includes a first connecting member 2301, and the first connecting member 2301 is configured to connect to a main positive electrode terminal of the cell assembly 100.

In some embodiments, the connecting member 230 includes a second connecting member 2302, and the second connecting member 2302 is configured to connect to a main negative electrode terminal of the cell assembly 100.

In some embodiments, the connecting member 230 includes a third connecting member 2303, and the third connecting member 2303 is configured to transmit electrical signal information of the cell 110.

In some embodiments, the sealing member 240 includes a first sealing member 2401, and the first sealing member 2401 is provided between the through hole 3112 and the first connecting member 2301.

In some embodiments, the sealing member 240 includes a second sealing member 2402, and the second sealing member 2402 is provided between the through hole 3112 and the second connecting member 2302.

In some embodiments, the sealing member 240 includes a third sealing member 2403, and the third sealing member 2403 is provided between the through hole 3112 and the third connecting member 2303.

In some embodiments, the sealing member 240 may be formed by pouring sealing material between the through hole 3112 and the connecting member 230, providing a good sealing effect for the sealing member 240.

In some embodiments, the sealing member 240 includes but is not limited to glue.

Referring to FIGs. 8, 9, and 15, FIG. 15 is a partially enlarged view of part A of the battery pack in FIG. 5.

In some embodiments, the extension portion 320 is provided with a first annular groove 322 on a side facing the housing 600. The housing 600 is provided with an annular flange 610, and the annular flange 610 is disposed around the third opening 600a, the annular flange 610 being disposed in the first annular groove 322. This allows the first annular groove 322 to limit the annular flange 610, makes the relative positions of the second component 300 and the housing 600 more stable, and also increases the bonding area between the second component 300 and the housing 600, further improving the sealing performance of the battery module 10 and reducing the entry of external water vapor into the housing 600.

In some embodiments, the annular flange 610 and the first annular groove 322 are bonded by glue, improving the sealing between the second component 300 and the housing 600, reducing the entry of external water vapor into the housing 600, and further improving the sealing performance of the battery module 10.

In some other embodiments, the annular flange 610 and the first annular groove 322 may alternatively be connected by welding.

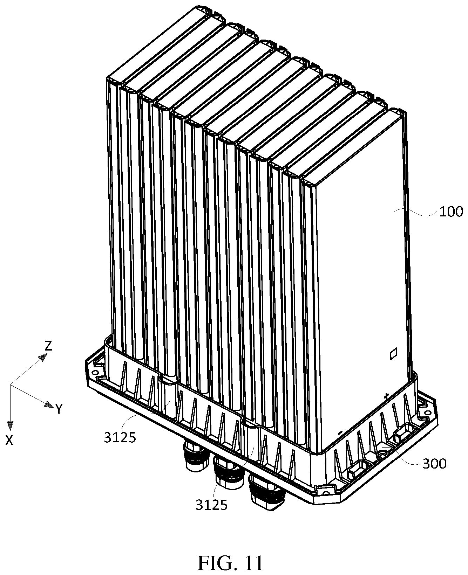

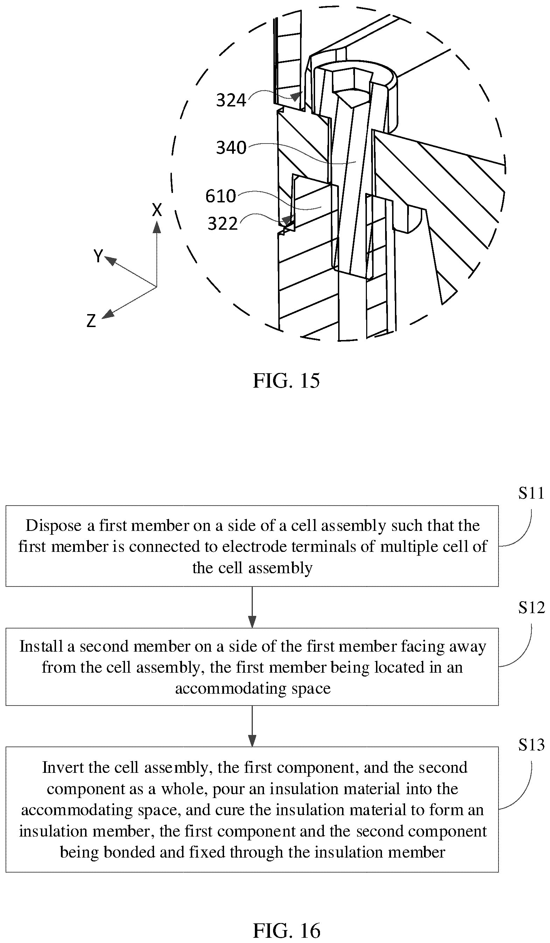

Referring to FIGs. 11 and 16, FIG. 11 is a schematic view of a partial structure of an invertedly placed battery module 10, and FIG. 16 is a schematic flowchart of a method for assembling a battery module according to some embodiments of this application.

Embodiments of this application provide a method for assembling a battery module, including the following steps.

Step S11. Dispose a first component 200 on a side of a cell assembly 100 such that the first component 200 is connected to electrode terminals 112 of a plurality of cells 110 of the cell assembly 100.

In some embodiments, the first component 200 may be welded to the plurality of electrode terminals 112.

Step S12. Install a second component 300 on a side of the first component 200, the side of the first component 200 being a side oriented away from the cell assembly 100, the first component 200 being located in an accommodating space 301.

Step S13. Invert the cell assembly 100, the first component 200, and the second component 300 as a whole, pour an insulation material into the accommodating space 301, and cure the insulation material to form a insulation member 400, the first component 200 and the second component 300 being bonded and fixed through the insulation member 400.

In some embodiments, after the insulation member 400 is formed, the cell assembly 100, the first component 200, and the second component 300 may be placed upright again to continue with the installation of the housing 600 and the like.

In some embodiments, the insulation material may be rubber, silica gel, plastic, or the like.

In some embodiments, the method for assembling a battery module includes: placing the cell assembly 100 into the housing 600 in such a way that the second component 300 covers the opening of the housing 600, and fixedly connecting the extension portion 320 to the housing 600.

In some embodiments, the extension portion 320 may be fixedly connected to the housing 600 by screws, adhesives, or the like.

Referring to FIGs. 2, 4, and 5, some embodiments of this application provide a battery pack 20 including an upper cover 700 and the battery module 10 according to any one of the above embodiments. Along the first direction X, the upper cover 700 is disposed on a side of the second component 300, the side of the second component 300 being a side oriented away from the cell assembly 100, and the upper cover 700 is fixedly connected to the extension portion 320. This makes the first component 200 fixed relative to the upper cover 700. When the battery module 10 shakes, the possibility of the first component 200 shaking relative to the upper cover 700 is relatively low, thereby reducing the possibility of short circuit and damage to the first component 200, as well as the possibility of thermal runaway in the battery module 10.

In some embodiments, the upper cover 700 may be made of a metal material, which has high deformation resistance, providing good protection and waterproof effects for internal structures.

Referring to FIGs. 7 to 9 and FIG. 15, in some embodiments, the extension portion 320 is provided with a second connecting hole 323, and the battery pack further includes a second fixing member 340, the second fixing member 340 extends throughthe second connecting hole 323 and fixedly connected to the upper cover 700 and the housing 600. This allows the upper cover 700, the second component 300, and the housing 600 to be stably connected, further reducing the possibility of the second component 300 shaking relative to the upper cover 700 and the housing 600.

In some embodiments, the second fixing member 340 may be a screw, and the second connecting hole 323 may be a threaded hole. The upper cover 700 and the housing 600 may also be provided with threaded holes for threaded connection to the screws.

In some other embodiments, the second fixing member 340 may alternatively be a pin, adhesive, or the like.

In some embodiments, the extension portion 320 is provided with a second annular groove 324 on a side facing the upper cover 700, and a part of the upper cover 700 is disposed in the second annular groove 324. This allows the second annular groove 324 to limit the upper cover 700, makes the relative positions of the second component 300 and the upper cover 700 more stable, and also increases the bonding area between the second component 300 and the upper cover 700, further improving the sealing performance of the battery module 10 and reducing the entry of external water vapor into the upper cover 700.

In some embodiments, the upper cover 700 and the second annular groove 324 are bonded by glue, which improves the sealing between the second component 300 and the upper cover 700 and reduces the entry of external water vapor into the upper cover 700, further improving the sealing performance of the battery module 10.

In some other embodiments, the upper cover 700 and the second annular groove 324 may alternatively connected by welding.

Embodiments of this application provide an electric device including a load and the battery pack according to any one of the above embodiments, where the battery pack provides power to the load.

The electric device can be any device or system that uses the battery pack.

It should be noted that, without conflict, some embodiments and features in the embodiments in this application may be combined with each other.

The foregoing descriptions are merely preferred embodiments of this application which are not intended to limit this application. Persons skilled in the art understand that this application may have various modifications and variations. Any modification, equivalent replacement, and improvement made without departing from the principle of this application shall fall within the protection scope of this application.

## Claims

1. A battery module (10), comprising:
a cell assembly (100) comprising a plurality of cells (110), and each cell (110) comprises a cell housing (111) and an electrode terminal (112), the electrode terminal (112) extending out of the cell housing (111);
a first component (200), along a first direction (X), the first component (200) is disposed on a side of the cell assembly (100), the electrode terminal (112) is connected to the first component (200);
a second component (300) comprising a base portion (310) and an extension portion (320), the base portion (310) has an accommodating space (301), the first component (200) is located in the accommodating space (301), and the extension portion (320) protrudes from the base portion (310); and
an insulation member (400), wherein at least a part of the insulation member (400) is located in the accommodating space (301), and the first component (200) and the second component (300) are bonded and fixed through the insulation member (400).

2. The battery module (10) according to claim 1, wherein the base portion (310) comprises a bottom wall (311) and a plurality of side walls (312); along the first direction (X), the bottom wall (311) is located on a side of the first component (200), the side of the first component (200) being a side oriented away from the cell assembly (100), the side walls (312) are disposed around the bottom wall (311), and the plurality of side walls (312) and the bottom wall (311) form the accommodating space (301); and
the extension portion (320) protrudes from the side walls (312) along a direction perpendicular to the first direction (X).

3. The battery module (10) according to claim 2, wherein the plurality of side walls (312) are disposed around an outer side of the cell assembly (100), and a part of each cell housing (111) is located in the accommodating space (301).

4. The battery module (10) according to claim 2 or 3, wherein the second component (300) comprises a recess (3125) provided on at least one of the side walls (312);
when viewed along the first direction (X), the recess (3125) is provided on an inner surface of the at least one of the side walls; and a part of the insulation member (400) is located in the recess (3125).

5. The battery module (10) according to claim 4, wherein the recess (3125) comprises a first opening (3125a) and a second opening (3125b), the first opening (3125a) faces the cell assembly (100); and when viewed along the first direction (X), a part of the bottom wall (311) is located in the second opening (3125b).

6. The battery module (10) according to claim 5, wherein the recess (3125) is configured for providing insulation material to the accommodating space (301) through the second opening (3125b) to form the insulation member (400).

7. The battery module (10) according to claim 6, wherein the insulation member (400) comprises a potting adhesive or a foaming adhesive.

8. The battery module (10) according to any one of claims 2 to 7, wherein the bottom wall (311) is provided with a protrusion (3111) on a side facing the cell assembly (100), the first component (200) is in contact with the protrusion (3111), a first gap (302) is formed between the first component (200) and the bottom wall (311), and a part of the insulation member (400) is located in the first gap (302).

9. The battery module (10) according to any one of claims 2 to 8, wherein the battery module (10) further comprises a connecting member (230), the connecting member (230) is connected to the first component (200), and the connecting member (230) is configured to transmit power and/or electrical signals from the cell assembly (100); and
the bottom wall (311) is provided with a through hole (3112), the connecting member (230) runs through the through hole (3112), and a sealing member is provided between the bottom wall (3111) and the connecting member (230) in the through hole (3112).

10. The battery module (10) according to any one of claims 4 to 6, wherein the each cell (110) further comprises an electrode assembly, and the cell housing (111) comprises a main body portion (1111) for accommodating the electrode assembly and a sealing portion (1112), the electrode terminal (112) extends out of the cell housing (111) from the sealing portion (1112); the electrode terminal (112) comprises a connecting portion (1121) extending out of the cell housing (111), the connecting portion (1121) is connected to the first component (200); and
the insulation member (400) covers at least a part of each connecting portion (1121); and/or the sealing portion (1112) is located in the accommodating space (301), and the insulation member (400) covers at least a part of each sealing portion (1112).

11. The battery module (10) according to claim 10, wherein the plurality of cells (110) are stacked in a second direction (Y), and a second gap (101) is formed between adjacent sealing portions (1112) along the second direction (Y);
the battery module (10) further comprises at least one buffer member (500), the buffer member (500) is disposed in at least one of the second gaps (101); and
along a third direction (Z), a projection of the recess (3125) overlaps with a projection of one of the second gaps (101); and the projection of the recess (3125) and the projection of the buffer member are spaced apart from each other;
the first direction (X), the second direction (Y), and the third direction (Z) are perpendicular to each other

12. The battery module (10) according to any one of claims 1 to 11, wherein the battery module (10) further comprises a housing (600), the housing (600) has a third opening (600a), the cell assembly (100) is accommodated in the housing (600), the second component (300) covers the third opening (600a), and the extension portion (320) is fixedly connected to the housing (600).

13. The battery module (10) according to any one of claims 1 to 12, wherein the first component (200) comprises a circuit board.

14. A battery pack (200), comprising an upper cover and the battery module (10) according to any one of claims 1 to 13; wherein along the first direction (X), the upper cover is disposed on a side of the second component (300), the side of the second component (300) being a side oriented away from the cell assembly (100), and the upper cover is fixedly connected to the extension portion (320).

15. An electric device, comprising a load and the battery pack (200) according to claim 14, wherein the battery pack (200) provides power to the load.
